# EUROPÄISCHE PATENTSCHRIFT

(11) **EP 0 463 354 B1**
(45) Veröffentlichungstag und Bekanntmachung des Hinweises auf die Patenterteilung: **05.04.1995**
(21) Anmeldenummer: 91108073.7
(22) Anmeldetag: 18.05.1991
(51) Int. Cl.: B01D 27/07, B01D 29/21

(54) **Filterelement in Wickelbauweise**
Filter element in spirally wound construction
Elément de filtre en forme de construction de bobinage

(30) Priorität: 29.06.1990 DE 4020831
(43) Veröffentlichungstag der Anmeldung: 02.01.1992
(73) Patentinhaber: ROBERT BOSCH GMBH, 70442 Stuttgart (DE)
(72) Erfinder: Vogel, Harald, Dipl.-Ing. (FH), W-8502 Weinzierlein (DE)

(56) Entgegenhaltungen:
- EP-A- 0 099 472
- EP-A- 0 447 830
- WO-A-90/05009
- DE-A- 3 210 795
- DE-A- 3 514 778
- GB-A- 2 134 811
- US-A- 2 525 330

## Beschreibung

### Stand der Technik

Die Erfindung geht aus von einem Filterelement in Wickelbauweise nach der Gattung des Hauptanspruchs.

Es ist schon ein solches Filterelement in Wickelbauweise nach der DE-A-38 37 423 bekannt, bei dem eine stirnseitig am Wickel vormontierte Abdeckkappe ein lagerfähiges Zwischenprodukt ergibt. Bei diesem Filterelement besteht der Wickel aus einem spiralförmig aufgewickelten, dünnen Bandmaterial, dessen außen in der Mantelfläche des Wickels liegendes Ende durch eine Längsnaht verschlossen ist. Insbesondere aus der DE-C-22 56 995 ist ein solcher Wickel mit Längsnaht bekannt, die aus Heißschmelzkleber besteht. Das auslaufende Ende einer solchen Längsnaht muß nun mit der Abdeckkappe dicht verbunden werden, um eine innere Dichtheit des Filterelements zu erreichen. Bei speziellen Anforderungen in der Praxis und vor allem wenn unterschiedliche Werkstoffe für Längsnaht und Abdeckkappe verwendet werden, kann es nun vorkommen, daß an dieser Verbindungsstelle Undichtheiten auftreten, zumal wenn sich die Werkstoffe nicht innig miteinander verbinden. Die Filtergüte des Filterelements kann dadurch nachteilig beeinflußt werden. Ferner kann bei dieser Bauweise mit stirnseitig montierter Abdeckkappe das Verschweißen der Faltkanten der äußersten Windungen mit einer Schweißfläche in der aus Kunststoff bestehenden Abdeckkappe dazu führen, daß wertvolle Filterfläche verloren gehen kann.

### Vorteile der Erfindung

Das erfindungsgemäße Filterelement in Wickelbauweise mit den kennzeichnenden Merkmalen des Hauptanspruchs hat demgegenüber den Vorteil, daß eine einwandfreie Abdichtung auch an solchen kritischen Stellen erzielbar ist. Es können daher für die Längsnaht und für die Abdeckkappe unterschiedliche Materialien, insbesondere Kunststoffe, verwendet werden, da sie durch die dünnwandige Filtermaterialscheibe voneinander getrennt werden. Die Filtermaterialscheibe stellt dabei eine innige, dichte Verbindung nach beiden Seiten her, so daß auch an dieser Stoßstelle von ungleichen Materialien Undichtheiten vermieden werden. Ferner erlaubt diese Bauweise des Filterelements eine bessere Ausnutzung der wirksamen Filterfläche, da die Abdichtung zwischen Wickel und Abdeckkappe mehr nach außen an die Mantelfläche des Wickels gelegt wird, so daß für die innere Abdichtung lediglich die äußere Papierwindung benutzt wird. Zudem baut das Filterelement platzsparend und relativ kostengünstig. Ferner hat das Filterelement auch den Vorteil, daß der Wickeldurchmesser nicht mehr so stark in die Verarbeitungsqualität eingeht, weil der Wickel nicht mehr so genau wie bisher in die bodenseitige Abdeckkappe passen muß.

Durch die in den Unteransprüchen aufgeführten Maßnahmen sind vorteilhafte Weiterbildungen und Verbesserungen des im Hauptanspruch angegebenen Filterelements möglich. Eine besonders einfache und preiswerte Lösung ergibt sich, wenn die Filtermaterialscheibe gemäß Anspruch 2 an der Mantelfläche des Wickels befestigt wird. Weiterhin ist es besonders vorteilhaft, wenn die Filtermaterialscheibe nach Anspruch 3 aus einfachem Filterpapier hergestellt wird. Weitere zweckmäßige Ausgestaltungen des Erfindungsgegenstandes ergeben sich aus den übrigen Ansprüchen, der Beschreibung sowie der Zeichnung.

### Zeichnung

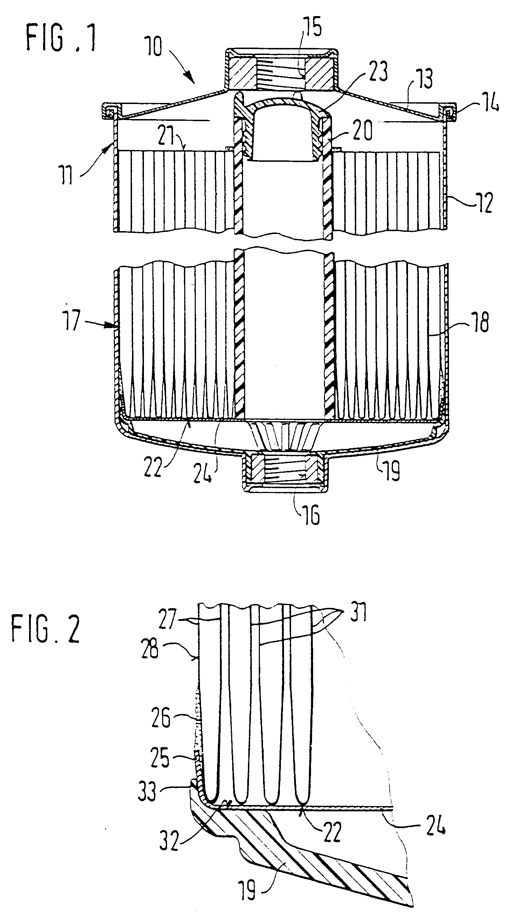

Ein Ausführungsbeispiel der Erfindung ist in der Zeichnung dargestellt und in der nachfolgenden Beschreibung näher erläutert. Es zeigen Figur 1 einen Längsschnitt durch ein Flüssigkeitsfilter mit dem erfindungsgemäßen Filterelement in vereinfachter Darstellung, Figur 2 als Einzelheit die Verbindungsstelle von Wickel und Abdeckkappe im Filterelement nach Figur 1, und die Figuren 2 bis 7 verschiedene Herstellungsstufen des Filterelements nach Figur 1 in vereinfachter Darstellung.

### Beschreibung des Ausführungsbeispiels

Die Figur 1 zeigt ein Flüssigkeitsfilter 10, desen Gehäuse 11 im wesentlichen aus einem becherförmigen Gehäuseteil 12 und einem Deckel 13 besteht, die an einer Bördelstelle 14 dicht und fest miteinander verbunden sind.

Das Flüssigkeitsfilter 10 ist als Leitungsfilter ausgebildet, wozu es an entgegengesetzt liegenden Enden des Gehäuses 11 zwei Anschlüsse 15, 16 aufweist, von denen der erste Anschluß 15 im Deckel 13 als Einlaß für den Flüssigkeitsstrom dient, während der zweite Anschluß 16 am Boden des Gehäuseteils 12 als Auslaß benutzt wird.

Das Gehäuse 11 nimmt in seinem Inneren ein axial durchströmtes Filterelement 17 auf, das im wesentlichen aus einem Wickel 18 und einer bodenseitigen Abdeckkappe 19 besteht, die dicht und fest mit dem Wickel 18 verbunden ist. Der Wickel 18 besteht in an sich bekannter Weise aus einer aufgewickelten Filtermaterialbahn mit V-förmigem Querschnitt, die unter Beifügung eines Klebers spiralig um ein Mittelrohr 20 gewickelt ist, so daß sich zwei spiralenförmig ineinandergreifende, jeweils zu einer Stirnseite 21 bzw. 22 hin offene Räume im Wickel 18 bilden. Das Mittelrohr 20 ist an seinem, der Schmutzseite und damit der ersten Stirnseite 21 zugeordneten Ende durch einen Stopfen 23 verschlossen.

Wie die Figur 1 vor allem in Verbindung mit der Einzelheit nach Figur 2 näher zeigt, ist die Abdeckkappe 19 nicht unmittelbar am Wickel 18 befestigt, sondern es ist zwischen beiden Bauelementen eine dünne Filtermaterialscheibe 24 angeordnet, die hier aus Filterpapier besteht. Diese Filtermaterialscheibe 24 ist ringförmig ausgebildet, liegt an der der Reinseite zugeordneten zweiten Stirnseite 22 des Wickels 18 an und weist einen umgestülpten, hochgezogenen Rand 25 auf, der ringförmig um den Wickel 18 herum verläuft und der mit Hilfe eines Heißschmelzklebers 26 mit der von der äußeren Windung 27 des Wickels 18 gebildeten Mantelfläche 28 verklebt ist. Bei dem Heißschmelzkleber 26 zum Versiegeln der Filtermaterialscheibe 24 läßt sich das gleiche Material verwenden, wie zum Herstellen einer Längsnaht 29 am Wickel 18. Die dichte Verbindung zwischen Filtermaterialscheibe 24 und Wickel 18 erfolgt somit lediglich an der Außenseite 28 der äußersten Windung 27, so daß die Filterfläche der inneren Windungen 31 noch voll wirksam werden können.

An dem so vorbereiteten Wickel 18 mit stirnseitig befestigter Filtermaterialscheibe 24 wird nun in an sich bekannter Weise die Abdeckkappe 19 befestigt. Zu diesem Zweck wird eine klebstofffreie Verbindung zwischen der am Wickel 18 befestigten Filtermaterialscheibe 24 einerseits und andererseits der Abdeckkappe 19 hergestellt. Dabei wird die aus thermoplastischem Material insbesondere aus Polyoxymethylen bestehende Abdeckkappe 19 im Bereich einer horizontal verlaufenden Schweißfläche 32 mit Hilfe eines eingeführten Heizstempels aufgeschmolzen und nach dem Herausziehen des Heizstempels der Wickel 18 in die noch aufgeschmolzene Materialerhebung eingepreßt, wobei die Filtermaterialscheibe 24 ringförmig auf der Schweißfläche 32 aufliegt und der geschmolzene Kunststoff nach dem Erstarren eine dichte und feste Verbindungsstelle zwischen Filterpapierscheibe 24 und Abdeckkappe 19 herstellt. Auf diese Weise ist sichergestellt, daß durch die dazwischenliegende Filtermaterialscheibe 24, selbst im Bereich der Längsnaht 29, der dort verwendete Heißschmelzkleber nicht unmittelbar mit dem Kunststoff der Abdeckkappe 19 in Berührung kommt, so daß auch in diesem kritischen Bereich eine einwandfreie und sichere Abdichtung erfolgt. Die Filterpapierscheibe 24 hat dabei auch den Vorteil, daß die an die äußerste Windung 27 nach innen angrenzenden Windungen 31 nicht in die Verklebung mit dem Heißschmelzkleber 26 einbezogen sind, so daß ihre Filterfläche voll wirksam bleibt und der Wickel 18 eine relativ große wirksame Filterfläche aufweist. Um die Festigkeit und die Dichtheit der Verbindung zwischen Wickel 18 und Abdeckkappe 19 weiter zu erhöhen, kann die Verbindungsstelle auch so ausgebildet werden, daß zusätzlich zu der radial verlaufenden Schweißfläche 32 auch der axial verlaufende Wulst 33 der Abdeckkappe 19 an seiner Innenseite mit dem hochgezogenen Rand 25 der Filterpapierscheibe 24 versiegelt ist. Durch die Verwendung der Filterpapierscheibe 24 läßt sich eine einwandfreie und sichere Abdichtung selbst dann herstellen, wenn für die Längsnaht 29 und die Abdeckkappe 19 unterschiedliche Kunststoffe verwendet werden, die sich nicht miteinander dicht verbinden lassen.

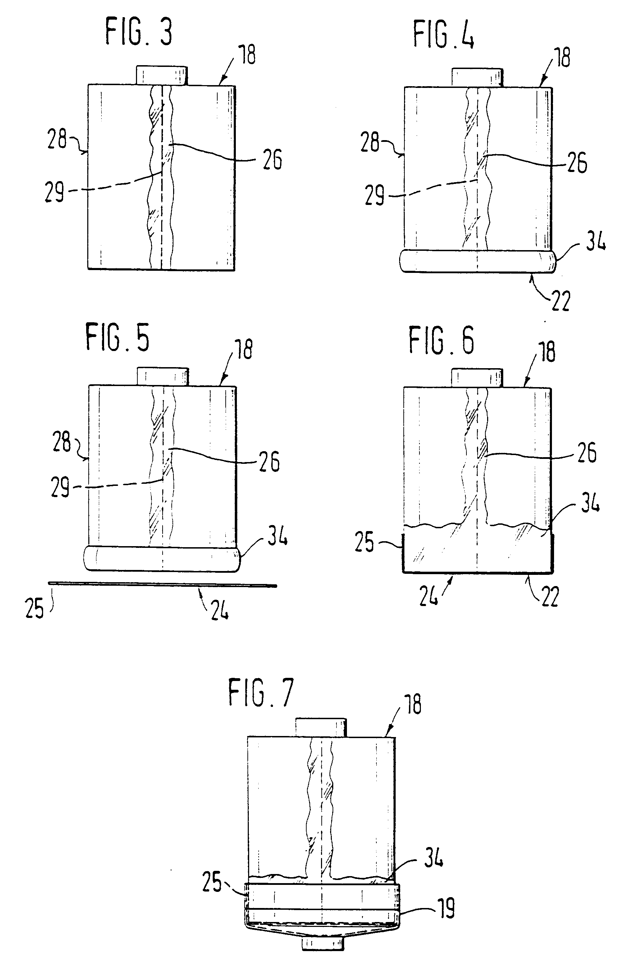

Die Figuren 3 bis 7 zeigen in stark vereinfachter Weise verschiedene Verfahrensstufen bei der Herstellung des Filterelements 17. Die Figur 3 zeigt in vereinfachter Weise den Wickel 18, an dem das Ende der äußeren Windung 27 in der Mantelfläche 28 durch eine Längsnaht 29 dicht verklebt ist. In der nachfolgenden Verfahrensstufe nach Figur 4 ist auf die Mantelfläche 28 des Wickels 18 nahe der zweiten Stirnseite 22 eine Rundnaht 34 aus Heißschmelzkleber aufgelegt. Rundnaht 34 und Längsnaht 29 bestehen dabei aus dem gleichen Material. Nach Figur 5 wird nun auf die Stirnseite 22 des Wickels 18 die Filterpapierscheibe 24 aufgelegt und mit ihrem Rand umgestülpt, wobei deren Rand 25 mit der Rundnaht 34 heißversiegelt wird. Figur 6 zeigt den anschließend erhaltenen Wickel 18 mit angeklebter Filtermaterialscheibe 24. In einer darauf folgenden Verfahrensstufe wird mit der Filtermaterialscheibe 24 in an sich bekannter Weise stirnflächig die Abdeckkappe 19 dicht verschweißt, wobei die aus thermoplastischem Kunststoff bestehende Abdeckkappe 19 mit dem Heißschmelzkleber der Längsnaht 29 nicht unmittelbar in Berührung kommt, sondern von der Filterpapierscheibe 24 nach beiden Seiten hin eine einwandfreie und dichte Verbindung hergestellt wird.

Das nach Figur 7 vormontierte Filterelement 17 wird in an sich bekannter Weise in das Gehäuse 11 des Flüssigkeitsfilters 10 eingebaut. Das über den Anschluß 15 zuströmende Druckmittel, insbesondere Kraftstoff, wird in an sich bekannter Weise vom Filterelement 17 gereinigt und strömt über den Anschluß 16 gereinigt ab.

Selbstverständlich sind an dem gezeigten Flüssigkeitsfilter 10 Änderungen möglich. So kann für die Filtermaterialscheibe 24 anstelle von Filterpapier auch ein anderes Material verwendet werden, sofern es mit den verwendeten Kunststoffen für Längsnaht 29 und Abdeckkappe 19 eine geeignete, dichte und feste Verbindung erlaubt. Auch die Bauart des Gehäuses 11 ist variabel und nicht auf die gezeigte Leitungsfilterbauart beschränkt, bei der die Anschlüsse an den entgegengesetzt liegenden Stirnseiten des Gehäuses 11 liegen.

## Patentansprüche

1. Filterelement (17) in Wickelbauweise, insbesondere zum Einbau in das Gehäuse eines Flüssigkeitsfilters (10) zum Reinigen von Kraftstoff, bei dem ein bandförmiges, dünnes Filtermaterial spiralförmig um ein Mittelrohr (20) aufgewickelt und mit Dichtmitteln abgedichtet ist, so daß zu entgegengesetzten Stirnseiten (21,22) hin offene Räume gebildet sind, die mit zwei voneinander getrennten Anschlüssen (15,16) im Gehäuse für Ein- und Auslaß verbindbar sind und mit einer Abdeckkappe (19) aus Kunststoff, die an einer Stirnseite (22) des Filterelements fest angeordnet ist, indem deren äußerer Rand am Filterelement im Bereich seiner äußeren Windung (27) und/oder an dessen Mantelfläche (28) dicht befestigt ist, wodurch der zu dieser Stirnseite (22) hin offene Raum mit dem zentralen Kanal im Mittelrohr verbunden ist und mit einer an der Mantelfläche des Filterelements angeordneten Längsnaht (29) aus Heißschmelzkleber, dadurch gekennzeichnet, daß zwischen der Abdeckkappe (19) und der zugeordneten Stirnseite (22) eine dünnwandige Filtermaterialscheibe (24) angeordnet ist, die mit ihrem umgestülpten ringförmigen Rand (25) mit der Mantelfläche (28) des Filterelements (17) verklebt ist und daß die Abdeckkappe (19) mit ihrem äußeren Rand (32, 33) lediglich an dieser Filtermaterialscheibe (24) dicht befestigt ist.

2. Filterelement nach Anspruch 1, dadurch gekennzeichnet, daß auf dessen Mantelfläche (28) an dem der Abdeckkappe (19) zugewandten Rand rings um das Filterelement (17) herum eine Rundnaht (34) aus Heißschmelzklebern aufgelegt ist, die mit dem umgestülpten Rand (25) der Filtermaterialscheibe (24) verschweißt ist.

3. Filterelement nach Anspruch 1 oder 2, dadurch gekennzeichnet, daß die Filtermaterialscheibe aus Filterpapier (24) besteht.

4. Filterelement nach einem der Ansprüche 1 bis 3, dadurch gekennzeichnet, daß die Abdeckkappe (19) aus einem thermoplastischen Kunststoff, insbesondere Polyoxymethylen besteht.

5. Filterelement nach einem der Ansprüche 1 bis 4, dadurch gekennzeichnet, daß die Abdeckkappe (19) wenigstens eine quer zur Längsachse des Filterelements (17) verlaufende, ringförmige Schweißfläche (32) aufweist, mit der der Wickel (18) stirnflächig verschweißt ist.

6. Filterelement nach einem der Ansprüche 1 bis 5, dadurch gekennzeichnet, daß die Abdeckkappe (19) einen axial verlaufenden Wulst (33) aufweist, deren Innenwand mit dem umgestülpten Rand (25) der Filtermaterialscheibe (24) auf der Mantelfläche (28) verschweißt ist.

7. Filterelement nach einem oder mehreren der Ansprüche 1 bis 6, dadurch gekennzeichnet, daß es in ein Gehäuse (11) mit Einlaß (15) und Auslaß (16) eingebaut ist.

8. Verfahren zur Herstellung eines Filterelements nach einem der Ansprüche 1 bis 7, dadurch gekennzeichnet, daß an einer Stirnseite (22) des Wickels (18) eine Filtermaterialscheibe (24) angelegt und ihr umgestülpter Rand (25) mit der Mantelfläche (28) des Wickels (18) verklebt wird, worauf der so vorbereitete Wickel (18) stirnflächig mit der Abdeckkappe (19) derart verschweißt wird, daß die Filtermaterialscheibe (24) Längsnaht (29) am Wickel (18) und Abdeckkappe (19) voneinander trennt.

## Claims

1. Filter element (17) in a wound-type of construction, in particular for fitting into the housing of a liquid filter (10) for cleaning fuel, in which a band-shaped, thin filter material is wound spirally around a centre tube (20) and is sealed off with sealing means so that spaces open towards opposite end faces (21, 22) are formed which can be connected to two connections (15, 16) in the housing, separate from one another, for inlet and outlet, and having a plastic cover cap (19), which is firmly arranged on one end face (22) of the filter element by its outer margin being tightly fastened to the filter element in the area of its outer convolution (27) and/or to its circumference (28), as a result of which the space open towards this end face (22) is connected to the central passage in the centre tube, and having a longitudinal seam (29) of hot-melt adhesive arranged on the circumference of the filter element, characterized in that a thin-walled filter-material disc (24) is arranged between the cover cap (19) and the allocated end face (22), which filter-material disc (24) is adhesively bonded with its turned-up, annular margin (25) to the circumference (28) of the filter element (17), and in that the cover cap (19) is tightly fastened with its outer margin (32, 33) merely to this filter-material disc (24).

2. Filter element according to Claim 1, characterized in that a circumferential seam (34) of hot-melt adhesives is placed all around the filter element (17) on its circumference (28) at the margin facing the cover cap (19), which circumferential seam (34) is welded to the turned-up margin (25) of the filter-material disc (24).

3. Filter element according to Claim 1 or 2, characterized in that the filter-material disc (24) is made of filter paper.

4. Filter element according to one of Claims 1 to 3, characterized in that the cover cap (19) is made of a thermoplastic, in particular polyoxymethylene.

5. Filter element according to one of Claims 1 to 4, characterized in that the cover cap (19) has at least one annular welding surface (32) which runs transversely to the longitudinal axis of the filter element (17) and to which the winding (18) is welded at the end face.

6. Filter element according to one of Claims 1 to 5, characterized in that the cover cap (19) has an axially running bead (33), the inner wall of which is welded to the turned-up margin (25) of the filter-material disc (24) on the circumference (28).

7. Filter element according to one or more of Claims 1 to 6, characterized in that it is fitted into a housing (11) having an inlet (15) and an outlet (16).

8. Method of producing a filter element according to one of Claims 1 to 7, characterized in that a filter-material disc (24) is placed against an end face (22) of the winding (18) and its turned-up margin (25) is adhesively bonded to the circumference (28) of the winding (18), whereupon the winding (18) thus prepared is welded at the end face to the cover cap (19) in such a way that the filter-material disc (24) separates longitudinal seam (29) on the winding (18) and cover cap (19) from one another.

## Revendications

1. Elément de filtre (17) en forme de construction de bobinage, en particulier pour l'insertion dans le boîtier d'un filtre à liquide (10) destiné à purifier du carburant, dans lequel une matière filtrante mince en forme de bande est enroulée en spirale autour d'un tube central (20) et est rendue étanche par des moyens d'étanchéité, de sorte qu'on forme des espaces ouverts vers les faces frontales opposées (21, 22), espaces qui peuvent être reliés par deux raccordements (15, 16) séparés l'un de l'autre dans le boîtier pour l'entrée et la sortie, l'élément comportant une chape de recouvrement (19) en matière plastique disposée de manière rigide sur une face frontale (22) de l'élément de filtre, en fixant de manière étanche son bord extérieur sur l'élément de filtre dans la zone de son enroulement extérieur (27) et/ou sur sa surface enveloppe, à la suite de quoi l'espace ouvert vers sa face frontale (22) est relié au canal central du tube médian et comporte aussi un joint longitudinal (29) en colle à fusion disposé sur la surface enveloppe de l'élément de filtre, caractérisé en ce qu'entre la chape de recouvrement (19) et la face frontale (22) associée, est disposé un disque de matière filtrante (24) à paroi mince qui est collé sur la surface enveloppe (28) de l'élément de filtre (17) et en ce que la chape (19) est fixée de manière étanche par son bord extérieur (32, 34) simplement sur ce disque de matière filtrante (24).

2. Elément de filtre selon la revendication 1, caractérisé en ce que, sur sa surface enveloppe (28), on applique sur le bord associé à la chape de recouvrement (19), tout autour de l'élément de filtre (17), un joint circulaire (34) en colle à fusion qui est fixé par soudure sur le bord relevé (25) du disque de matière filtrante (24).

3. Elément de filtre selon les revendications 1 ou 2, caractérisé en ce que le disque de matière filtrante est constitué de papier filtre (24).

4. Elément de filtre selon l'une des revendications 1 à 3, caractérisé en ce que la chape de recouvrement (19) est composée d'une matière synthétique thermoplastique, en particulier de polyoxyméthylène.

5. Elément de filtre selon l'une des revendications 1 à 4, caractérisé en ce que la chape de recouvrement (19) comprend au moins une surface de soudure (32) annulaire, se développant perpendiculairement à l'axe longitudinal de l'élément de filtre (17), sur laquelle le bobinage (18) est soudé par sa surface frontale.

6. Elément de filtre selon l'une des revendications 1 à 5, caractérisé en ce que la chape de recouvrement (19) comporte un bourrelet (33) se développant axialement, dont la paroi intérieure est soudée à la surface enveloppe (28) par le bord (25) relevé du disque de matière filtrante (24).

7. Elément de filtre selon l'une ou plusieurs des revendications 1 à 6, caractérisé en ce qu'il est inséré dans un boîtier (11) ayant une entrée (15) et une sortie (16).

8. Procédé de fabrication d'un élément de filtre selon l'une des revendications 1 à 7, caractérisé en ce que sur l'une des faces frontales (22) du bobinage (18) est appliqué un disque de matière filtrante (24), et en ce que son bord relevé (25) est collé sur la surface enveloppe (28) du bobinage (18), à la suite de quoi le bobinage (18) ainsi préparé est soudé à la chape de recouvrement (19) par sa surface frontale, de manière que le disque de matière filtrante (24) sépare l'un de l'autre le joint longitudinal (29) sur le bobinage (18), et la chape de recouvrement (19).
